# EUROPÄISCHE PATENTSCHRIFT

(11) **EP 0 545 117 B1**
(45) Veröffentlichungstag und Bekanntmachung des Hinweises auf die Patenterteilung: **24.01.1996**
(21) Anmeldenummer: 92119422.1
(22) Anmeldetag: 13.11.1992
(51) Int. Cl.: E05D 7/10, B64D 11/00, E05D 7/00

(54) **Scharnier für ein klappbares Schienenprofil**
Hinge fopr a tilting member
Charnière pour un profilé abattant

(30) Priorität: 06.12.1991 DE 4140266
(43) Veröffentlichungstag der Anmeldung: 09.06.1993
(73) Patentinhaber: Drägerwerk Aktiengesellschaft, D-23542 Lübeck (DE)
(72) Erfinder: Marquardt, Wolfgang, W-2406 Stockelsdorf (DE); Thometschek, Roderich, W-2406 Stockelsdorf (DE); Rittner, Wolfgang, W-2407 Bad Schwartau (DE); Rother, Alfred, W-2400 Lübeck (DE); Wollnik, Holger, W-2400 Lübeck (DE); Bauer, Christoph, W-4530 Ibbenbüren (DE); Schnoor, Christian, W-2400 Lübeck 1 (DE)

(56) Entgegenhaltungen:
- DE-A- 3 719 427
- FR-A- 2 535 378
- US-A- 2 205 969

## Beschreibung

Die Erfindung betrifft ein Scharnier für ein klappbares Schienenprofil zum Einbau eines Behälters einer Sauerstoffversorgungseinheit in ein Fluggerät, in Verbindung mit einer parallel zur Längsseite des Schienenprofils verlaufenden, um ein Gelenk am hinteren Behälterrand des Behälters schwenkbaren Behältertür mit einem ersten Scharnierteil am Schienenprofil und einem zweiten Scharnierteil am Behälterrand des Behälters.

Eine Sauerstoffversorgungseinheit mit einem klappbaren Schienenprofil zum Einbau der vollständigen Einheit in ein Fluggerät ist aus der DE-A1 37 19 427 bekanntgeworden. Derartige Sauerstoffversorgungseinheiten sind in den Deckenaufbauten im Passagierraum von Flugzeugen angeordnet und dienen im Bedarfsfall zur Versorgung der Passagiere mit dem zur Atmung notwendigen Sauerstoff. Die Sauerstoffversorgungseinheit besteht aus einem Behälter, in welchem mehrere Sauerstoffmasken und ein Sauerstoffgenerator angeordnet sind und einer um ein Gelenk schwenkbaren Behältertür, die zum Verschluß des Behälters dient.

Am vorderen und hinteren Behälterrand sind, parallel zum Gelenk der Behältertür verlaufend, klappbare Schienenprofile angebracht, mit denen die komplette Sauerstoffversorgungseinheit in eine Aufnahme im Deckenaufbau des Flugzeugs eingehängt werden kann. Die Schienenprofile dienen hierbei einerseits zur einfachen Befestigung der Sauerstoffversorgungseinheit im Deckenaufbau und erleichtern andererseits auch den Ausbau, indem die komplette Sauerstoffversorgungseinheit ohne Werkzeug aus dem Deckenaufbau herausnehmbar ist. Da die Sauerstoffversorgungseinheiten den Passagieren zugeordnet sind und daher, besonders bei Großraumflugzeugen, in großen Stückzahlen an Bord vorhanden sind, müssen sie sowohl hinsichtlich minimalem Gewicht als auch kostengünstiger Herstellbarkeit optimiert sein.
Bei der Wartung sollen andererseits Verschleißteile, wie z.B. das Schienenprofil, einfach austauschbar sein.

Die Schienenprofile sind üblicherweise mit einer Art Klavierband-Scharnier an dem Behälter befestigt mit einem durchgeschobenen Stab als Drehachse. Soll das Schienenprofil ausgetauscht werden, muß zunächst der Stab aus dem Klavierband-Scharnier herausgezogen werden, und danach kann das Schienenprofil vom Behälter abgenommen werden. Das Gelenk der Behältertür besteht aus einzelnen Lagerböcken, die auf den Behälterrand als separate Komponenten aufgeschraubt sind und einem durchgeschobenen Stab als Drehachse für die Behältertür. Neben der Befestigung der Behältertür dienen die Lagerböcke besonders auch als Anschlag, um den Schwenkhub der Behältertür zu begrenzen.

Nachteilig bei der bekannten Sauerstoffversorgungseinheit ist, daß sowohl das Scharnier für die Schienenprofile als auch das Gelenk der Behältertür mit den Lagerböcken eine Vielzahl von Einzelteilen erfordert, was sich sowohl auf die Herstellkosten als auch auf das Gerätegewicht nachteilig auswirkt. Außerdem wird das Auswechseln der Schienenprofile dadurch erschwert, daß der die Drehachse bildende Stab aus dem Klavierband-Scharnier herausgezogen werden muß.

In dem DE-GM 19 57 658 ist ein Scharnier für den Deckel eines Kunststoffkastens veranschaulicht, wobei die Scharnierteile unmittelbar an den Deckel bzw. den Kasten angeformt sind und aus zwei Schlitzen am Rand des Deckels bestehen, in welche halbkreisförmig ausgebildete Zungen des Kastens eingreifen.

Die Herstellung eines derartigen Scharniers wird dadurch erschwert, daß die Begrenzungsstege der Schlitze am Deckel rechtwinklig nach unten abgeknickt sind und erst dort, stufenförmig versetzt zur planen Oberfläche des Deckels, einen zwischen den Begrenzungsstegen befindlichen Wulst als Drehpunkt für das Scharnier aufweisen. Außerdem besitzt das bekannte Scharnier keine Anschlagfunktion für den Schenkhub des Deckels.

Der Erfindung liegt die Aufgabe zugrunde, die Scharnieranbindung des Schienenprofils an den Behälter zu vereinfachen und gleichzeitig dabei einen Anschlag für die Behältertür zu realisieren.

Die Lösung der Aufgabe erfolgt dadurch, daß das erste Scharnierteil aus einem an die Längsseite des Schienenprofils stückweise angeformten Wulst besteht, wobei an den nicht angeformten Stücken des Wulstes Schlitze vorhanden sind und daß das zweite Scharnierteil korrespondierend zur äußeren Form des Wulstes aus zumindest an den hinteren Behälterrand angeformten Zungen besteht, welche in die Schlitze eingreifen und daß die Zungen des hinteren Behälterrands am Zungenende derart aufgerichtet sind, daß die Zungenenden einen den Schwenkhub der Behältertür begrenzenden Anschlag bilden.

Der Vorteil der Erfindung besteht im wesentlichen darin, daß das am Schienenprofil befindliche erste Scharnierteil ohne Zusatzkomponenten in das zweite Scharnierteil eingesetzt werden kann und die Scharnierfunktion sich durch den Formschluß des ersten Scharnierteils mit dem zweiten Scharnierteils ergibt. Die Schlitze können als Durchbrüche im Schienenprofil im Bereich der nicht angeformten Stücke des Wulstes ausgeführt sein. Durch das Aufrichten der Zungen am hinteren Behälterrand am Zungenende wird durch das Zungenende ein Anschlag gebildet, der den Schwenkhub der Behältertür begrenzt. Zum Abnehmen des Schienenprofils wird dieses an einem Ende angefaßt und reißverschlußartig aus den Zungen herausgezogen. In umgekehrter Reihenfolge erfolgt die Montage des Schienenprofils.

Vorteilhafte Ausgestaltungen der Erfindung sind in den Unteransprüchen angegeben.

Es ist vorteilhaft, an den vorderen Behälterrand Zungen anzuformen, welche in die Schlitze des Schienenprofils eingreifen und das zweite Scharnierteil derart auszuführen, daß zwischen jeweils zwei benachbarten Zungen an den vorderen und/oder hinteren Behälterrand angeformte, den Wulst mindestens teilweise umfassende,
federnde Vorsprünge vorhanden sind. Die Vorsprünge dienen als nachgiebige Rasteinrichtung für den Wulst und sollen verhindern, daß das erste Scharnierteil aus den Zungen bei der Drehbewegung herausspringt. Bei der Demontage des ersten Scharnierteils geben die Vorsprünge aufgrund ihrer Elastizität nach und der Wulst kann aus den Zungen herausgezogen werden.

Zur Verbesserung der Schwenkbarkeit der Behältertür ist es zweckmäßig, daß am hinteren Behälterrand die Knickstelle zwischen Zunge und Zungenende unterhalb des Gelenks der Behältertür liegt.

Eine besonders einfache Herstellbarkeit des zweiten Scharnierteils ergibt sich, wenn der Wulst im Bereich der Schlitze eine um die Zungenstärke verminderte Querschnittsfläche aufweist.

Zur Stabilisierung der Behältertür ist es zweckmäßig, die Länge des aufgerichteten Zungenendes derart zu bemessen, daß es bei geschlossener Behältertür an deren Innenseite anliegt.

Zur besseren Krafteinleitung der auf die Zungen wirkenden Kräfte in den Behälterrand ist es zweckmäßig, den vorderen und/oder hinteren Behälterrand im Bereich der Zungen mit sickenförmigen Einsenkungen zu versehen. Die Einsenkungen erhöhen die Biegesteifigkeit des Behälterrandes im Bereich der Zungen, und geben zusätzlich dem Behälterrand eine erhöhte Formbeständigkeit.

Ein Ausführungsbeispiel der Erfindung ist in der Zeichnung dargestellt und im folgenden näher erläutert.

Es zeigen:
- Fig. 1: die perspektivische Ansicht eines Behälters für eine Sauerstoffversorgungseinheit,
- Fig. 2: die Darstellung des Scharniers in der Ansicht A nach der Fig. 1,
- Fig. 3: die Schnittdarstellung B-B nach Fig. 1.

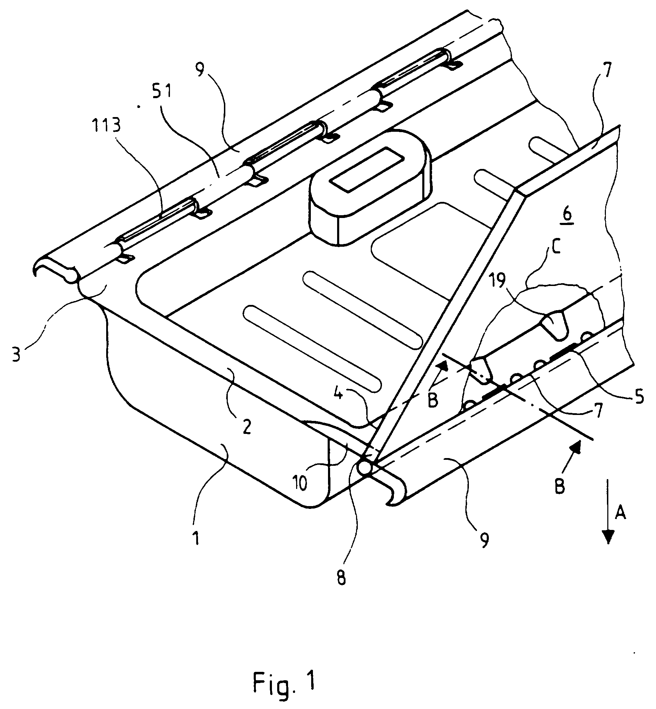

In der Fig. 1 ist die perspektivische Teilansicht eines Behälters (1) für eine in der Fig. 1 nicht dargestellte Sauerstoffversorgungseinheit veranschaulicht. Der Behälter (1) ist als einstückiges Formteil aus Aluminiumblech gefertigt mit einem umlaufenden Behälterrand (2). An einem vorderen Behälterrand (3) und an einem hinteren Behälterrand (4) ist jeweils ein Schienenprofil (9) angebracht, mit dem der Behälter (1) im Fluggerät befestigt ist. Die Schienenprofile (9) sind um ein Scharnier (5) am hinteren Behälterrand (4) bzw. um ein Scharnier (51) am vorderen Behälterrand (3) drehbar.

Der Behälter (1) ist mit einer kastenförmigen Behältertür (6) verschließbar. Die Behältertür (6) besitzt einen umlaufenden Türrand (7), der in Schließstellung auf dem Behälterrand (2) und dem vorderen Behälterrand (3) aufliegt; die Behältertür (6) ist um ein Gelenk (8) schwenkbar. Das Gelenk (8) ist in der Weise ausgeführt, daß die Seitenteile des hinteren Behälterrandes (4) als Blechfalz (10) nach oben abgekantet und mit einem in der Figur 1 nicht dargestellten Stift mit dem Türrand (7) der Behältertür (6) verbunden sind. In der Fig. 1 ist nur ein Gelenk (8) dargestellt. Das zweite Gelenk ist äquivalent aufgebaut und befindet sich an der gegenüberliegenden Seite. Die Behältertür (6) ist längs der Schnittkante C aufgebrochen, so daß das Scharnier (5) für das Schienenprofil (9) und der Türrand (7) sichtbar sind.

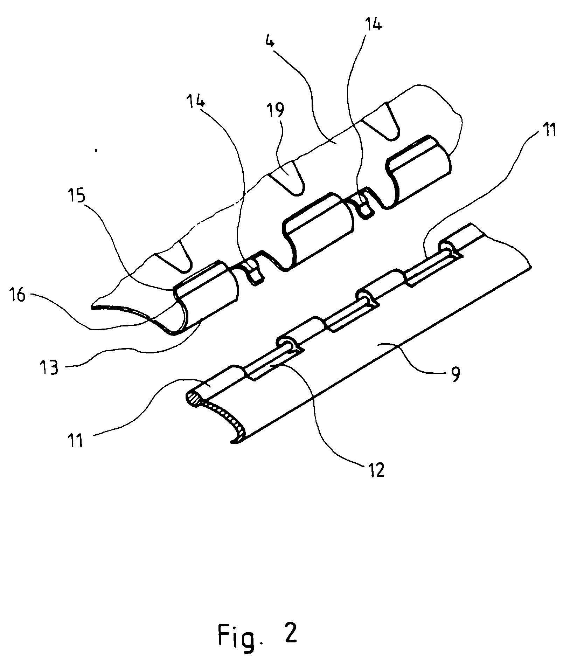

In der Fig. 2 ist das Scharnier (5) als Ausschnitt veranschaulicht in der Ansicht A nach der Fig. 1. Gleiche Komponenten sind mit gleichen Bezugsziffern der Fig. 1 bezeichnet. Das Scharnier (5) besteht aus einem ersten Scharnierteil und einem zweiten Scharnierteil wobei das zweite Scharnierteil durch einen stückweise an das Schienenprofil (9) angeformten Wulst (11) entsteht, und die nicht angeformten Stücke des Wulstes (11) als Schlitze (12) ausgeführt sind. Das erste Scharnierteil besteht aus einzelnen Zungen (13), die in die Schlitze (12) eingreifen und korrespondierend zur äußeren Form des Wulstes (11) geformt sind. In der Fig. 2 sind die Scharnierteile im demontierten Zustand dargestellt. Der Wulst (11) ist im Bereich der Zungen (13) derart ausgeführt, daß die Querschnittsfläche etwa um die Materialstärke der Zunge (13) reduziert ist. Zwischen zwei Zungen (13) befinden sich Vorsprünge (14), die ebenfalls einstückig an den hinteren Behälterrand (4) angeformt sind und dazu dienen, den Wulst (11) in die Zungen (13) hineinzudrücken bzw. zu verhindern, daß der Wulst bei der Drehbewegung aus den Zungen (13) herausspringt. Die Vorsprünge (14) gleiten ebenfalls an dem Wulst (11). Die Zungen (13) sind am Zungenende (15) an einer Knickstelle (16) senkrecht aufgerichtet, wodurch ein den Schwenkhub der Behältertür (6) begrenzender Anschlag gebildet wird. Zur Montage des Schienenprofils (9) wird zunächst eine Zunge (13) in den zugehörigen Schlitz (12) eingeführt und danach dieses reißverschlußartig mit den übrigen Zungen (13) und Schlitzen (12) fortgesetzt. Am hinteren Behälterrand (4) sind im Bereich der Zungen (13) sickenförmige Einsenkungen (19) vorgesehen, die mit sich verjüngender Querschnittsfläche auf die Zungen (13) zulaufen. Die Einsenkungen (19) dienen zur besseren Krafteinleitung von den Zungen (13) in den hinteren Behälterrand (4) und geben zusätzlich dem hinteren Behälterrand (4) eine erhöhte Formbeständigkeit.

Das Scharnier (51), Fig. 1, am vorderen Behälterrand (3) ist äquivalent ausgeführt zu dem Scharnier (5) am hinteren Behälterrand (4), mit dem Unterschied, daß die Zungen (113) am vorderen Behälterrand (3) nicht das aufgerichtete Zungenende (15) besitzen.

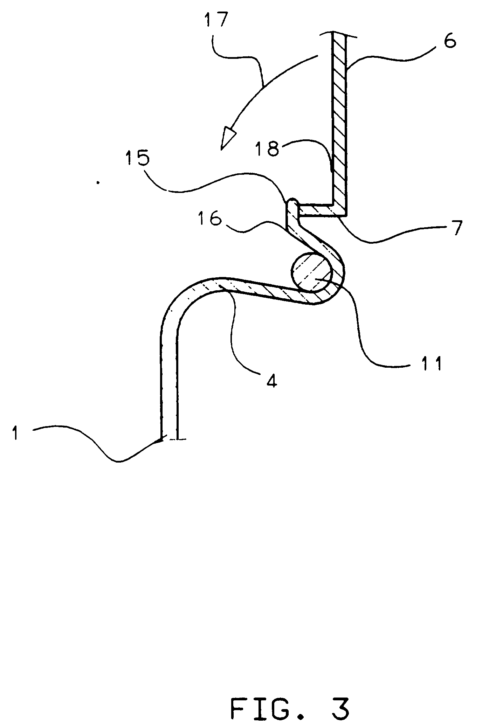

In Fig. 3 ist die Schnittdarstellung B-B nach der Fig. 1 veranschaulicht. Gleiche Komponenten sind mit gleichen Bezugsziffern der Figuren 1 und 2 bezeichnet. Um ein gleichmäßiges Aufliegen des Türrandes (7) am Behälterrand (2) zu erreichen, ist der hintere Behälterrand (4) nach unten abgekantet. Um die Anschlagfunktion an dem Zungenende (15) zu realisieren, d.h. Anschlag des Türrandes (7) an dem Zungenende (15), liegt die Knickstelle (16) unterhalb des Gelenks (8) der Behältertür (6).
In der Fig. 3 schlägt der untere Türrand (7) gegen das Zungenende (15). Der Pfeil (17) veranschaulicht die Schließrichtung der Behältertür (6).
Die Länge des Zungenendes (15) ist so bemessen, daß dieses bei geschlossener Behältertür (6) gerade gegen deren Innenseite (18) stößt. Dadurch wird sowohl ein gleichmäßiges Aufliegen als auch eine Stützwirkung der Behältertür (6) im Bereich des hinteren Behälterrandes (4) erreicht.

## Patentansprüche

1. Scharnier für ein klappbares Schienenprofil (9) zum Einbau eines Behälters (1) einer Sauerstoffversorgungseinheit in ein Fluggerät, in Verbindung mit einer parallel zur Längsseite des Schienenprofils (9) verlaufenden, um ein Gelenk (8) am hinteren Behälterrand (4) des Behälters (1) schwenkbaren Behältertür (6) mit einem ersten Scharnierteil am Schienenprofil (9) und einem zweiten Scharnierteil am Behälterrand (3, 4) des Behälters (1), dadurch gekennzeichnet, daß das erste Scharnierteil aus einem an die Längsseite des Schienenprofils (9) stückweise angeformten Wulst (11) besteht, wobei an den nicht angeformten Stücken des Wulstes (11) Schlitze (12) vorhanden sind, und daß das zweite Scharnierteil, korrespondierend zur äußeren Form des Wulstes (11) aus zumindest an den hinteren Behälterrand (4) angeformten Zungen (13) besteht, welche in die Schlitze (12) eingreifen, und daß die Zungen (13) des hinteren Behälterrands (4) am Zungenende (15) derart aufgerichtet sind, daß die Zungenenden (15) einen den Schwenkhub der Behältertür (6) begrenzenden Anschlag bilden.

2. Scharnier in Verbindung mit Behältertür nach Anspruch 1, dadurch gekennzeichnet, daß an den vorderen Behälterrand (3) angeformte Zungen (113) vorhanden sind, welche in die Schlitze des Schienenprofils (9) eingreifen und daß das zweite Scharnierteil zwischen zwei benachbarten Zungen (13, 113) am vorderen und/oder hinteren Behälterrand (3, 4) an den vorderen und/oder hinteren Behälterrand (3, 4) angeformte, den Wulst (11) mindestens teilweise umfassende, federnde Vorsprünge (14) aufweist.

3. Scharnier in Verbindung mit Behältertür nach einem der Ansprüche 1 oder 2, dadurch gekennzeichnet, daß der hintere Behälterrand (4) derart angekantet ist, daß die Knickstelle (16) zwischen der Zunge (13) und dem Zungenende (15) am hinteren Behälterrand (4) unterhalb des Gelenks (8) der Behältertür (6) liegt.

4. Scharnier in Verbindung mit Behältertür nach einem der Ansprüche 1 bis 3, dadurch gekennzeichnet, daß der Wulst (11) im Bereich der Schlitze (12) eine um die Stärke der Zungen (13, 113) verminderte Querschnittsfläche aufweist.

5. Scharnier in Verbindung mit Behältertür nach einem der Ansprüche 1 bis 4, dadurch gekennzeichnet, daß die Länge des aufgerichteten Zungenendes (15) derart bemessen ist, daß es bei geschlossener Behältertür (6) an deren Innenseite (18) anliegt.

6. Scharnier in Verbindung mit Behältertür nach einem der Ansprüche 1 bis 5, dadurch gekennzeichnet, daß das zweite Scharnierteil am Behälterrand (3, 4) im Bereich der Zungen (13, 113) sickenförmige Einsenkungen (19) aufweist.

## Claims

1. Hinge for a hinged rail profile (9) for installing a container (1) of an oxygen supply unit in a flying device, which hinge is connected to a container door (6), which extends such that it is parallel to the longitudinal side of the rail profile (9) and can be pivoted around a joint (8) on the rear container edge (4) of the container (1), having a first hinge part on the rail profile (9) and a second hinge part on the container edge (3, 4) of the container (1), characterised in that the first hinge part comprises an enlargement (11), which is preformed in pieces on the longitudinal side of the rail profile (9), with slits (12) being present on the non-preformed pieces of the enlargement (11), and in that the second hinge part, corresponding to the external shape of the enlargement (11), comprises tongues (13), which are preformed at least on the rear container edge (4) and engage in the slits (12), and in that the tongues (13) of the rear container edge (4) are raised at the end of the tongue (15) in such a way that the tongue ends (15) form a limit stop which delimits the pivoting clearance of the container door (6).

2. Hinge connected to a container door according to claim 1, characterised in that preformed on the front container edge (3) there are tongues (113), which engage in the slits of the rail profile (9), and in that between two adjacent tongues (13, 113) on the front and/or rear container edge (3, 4), the second hinge part has spring-like projections (14), which are preformed on the front and/or rear container edge (3, 4) and surround the enlargement (11) at least partially.

3. Hinge connected to a container door according to one of the claims 1 or 2, characterised in that the rear container edge (4) is edged in such a way that the point of bending (16) between the tongue (13) and the tongue end (15) on the rear container edge (4) lies beneath the joint (8) of the container door (6).

4. Hinge connected to a container door according to one of the claims 1 to 3, characterised in that in the region of the slits (12), the enlargement (11) has a cross-sectional area which is reduced by the amount of the thickness of the tongues (13, 113).

5. Hinge connected to a container door according to one of the claims 1 to 4, characterised in that the length of the raised tongue end (15) is dimensioned in such a way that when the container door (6) is closed, said tongue end rests against the inside (18) of said container door.

6. Hinge connected to a container door according to one of the claims 1 to 5, characterised in that in the region of the tongues (13, 113), the second hinge part on the container edge (3, 4) has crease-like indentations (19).

## Revendications

1. Charnière pour un profilé de rail rabattable (9) pour le montage d'une boîte (1) d'une unité d'alimentation en oxygène dans un aéronef, associée à une porte de boîte (6) s'étendant parallèlement au côté longitudinal du profilé de rail (9) et pouvant pivoter autour d'une articulation (8) sur le bord arrière (4) de la boîte (1), avec une première partie de charnière sur le profilé de rail (9) et une seconde partie de charnière sur le bord (3, 4) de la boîte (1), **caractérisée** en ce que la première partie de charnière est constituée d'un bourrelet (11) façonné par tronçons sur le côté longitudinal du profilé de rail (9), des fentes (12) étant présentes sur les tronçons non façonnés du bourrelet (11), en ce que la seconde partie de charnière est constituée, en correspondance à la forme extérieure du bourrelet (11), de languettes (13) façonnées au moins sur le bord arrière (4) de la boîte, qui s'engagent dans les fentes (12), et en ce que les languettes (13) du bord arrière (4) de la boîte sont, à leur extrémité (15), redressées de telle sorte que les extrémités (15) des languettes forment une butée limitant la course de pivotement de la porte de boîte (6).

2. Charnière associée à une porte de boîte selon la revendication 1, **caractérisée** en ce que des languettes façonnées (113) sont présentes sur le bord avant (3) de la boîte, qui s'engagent dans les fentes du profilé de rail (9), et en ce que la seconde partie de charnière présente, entre deux languettes voisines (13, 113) sur le bord avant et/ou arrière (3, 4) de la boîte, des saillies élastiques (14) façonnées sur le bord avant et/ou arrière (3, 4) de la boîte, qui entourent au moins partiellement le bourrelet (11).

3. Charnière associée à une porte de boîte selon la revendication 1 ou 2, **caractérisée** en ce que le bord arrière (4) de la boîte est replié de telle sorte que le point d'inflexion (16) entre la languette (13) et l'extrémité de la languette (15) sur le bord arrière (4) de la boîte se trouve en dessous de l'articulation (8) de la porte de boîte (6).

4. Charnière associée à une porte de boite selon l'une quelconque des revendications 1 à 3, **caractérisée** en ce que le bourrelet (11) présente, dans la région des fentes (12), une superficie de section réduite de l'épaisseur des languettes (13, 113).

5. Charnière associée à une porte de boîte selon l'une quelconque des revendications 1 à 4, **caractérisée** en ce que la longueur de l'extrémité redressée (15) des languettes est dimensionnée de telle sorte que cette extrémité s'applique contre le côté intérieur (18) de la porte de boîte (6) lorsque cette dernière est fermée.

6. Charnière associée à une porte de boite selon l'une quelconque des revendications 1 à 5, **caractérisée** en ce que la seconde partie de charnière sur le bord (3, 4) de la boîte présente des creusures (19) en forme de moulures dans la région des languettes (13, 113).
